# EUROPEAN PATENT SPECIFICATION

(11) **EP 2 204 295 B1**
(45) Date of publication and mention of the grant of the patent: **25.02.2015**
(21) Application number: 08792409.8
(22) Date of filing: 12.08.2008
(51) Int. Cl.: B60C 11/11, B60C 11/04

(54) **OFF-ROAD PNEUMATIC TIRE**
GELÄNDELUFTREIFEN
PNEUMATIQUE TOUT TERRAIN

(30) Priority: 13.09.2007 JP 2007238196
(43) Date of publication of application: 07.07.2010
(73) Proprietor: Sumitomo Rubber Industries, Ltd., Kobe-shi, Hyogo 651-0072 (JP)
(72) Inventor: SUEISHI, Makoto, Kobe-shi Hyogo 651-0072 (JP)
(74) Representative: Manitz, Finsterwald & Partner GbR
(86) International application number: PCT/JP2008/064476
(87) International publication number: WO 2009/034807

(56) References cited:
- DE-U1-202004 006 512
- JP-A- 02 074 405
- JP-A- 2000 025 417
- JP-A- 2003 306 011
- US-A- 1 223 049

## Description

### TECHNICAL FIELD

The present invention relates to an off-road pneumatic ti re being capable of improving stability of straight running on a soft road such as mud. The features of the preamble of the independent claim are known from DE 20 2004 006512 U1. Related technology is known from US 223 049 A.

### BACKGROUND OF THE INVENTION

Off-road vehicles like a motocross bicycle are generally provided with pneumatic tires having a block patterns composed of a plural of blocks on a tread portion. (See the undermentioned Patent document 1, for example.) Owing to such a block pattern, the tire digs into the road surface, thereby keeping sufficient drive force on soft-muddy road.

However, especially on the soft road surface like mud, the tire is liable to be (float) on the mud while unaccelerated running, the so-called partial running, or breaking. As a result, the tire tends to wobble. Therefore, it is hoped to prevent the wobble of the tire and to improve steering stability while running on the off-road.
Patent document 1: Japanese Unexamined Patent Application Publication No. 2003-72318.

### DISCLOSURE OF THE INVENTION

### PROBLEMS TO BE SOLVED BY THE INVENTION

The present invention, devised in view of the above-mentioned situation, aims to provide an off-road pneumatic tire, which can effectively prevent the wobble of the tire on a soft road and improve steering stability based on the tire comprising center blocks arranged on the ti re equator, wherein each of the center bl ock includes a lateral-long block main portion and a keel portion prepared integrally and projecting with a small width toward the rear side in the ti re rotational di recti on.

### MEANS FOR SOLVING THE PROBLEM

The present invention is defined by independent claim 1.

### EFFECT OF THE INVENTION

The off-road pneumatic tire according to the present invention is provided on a tread portion with center blocks arranged on the ti re equator. Such a center block helps to improve sufficiently drive power on a soft muddy road.

Each of the above-mentioned center block comprises
a lateral-long block main portion having a width in the tire axial direction larger than the length of the block main portion in the tire circumferential direction, and
a keel portion prepared integrally on the rear side of the block main portion in the tire rotational direction and projecting with a small width toward the rear side in the tire rotational direction.

In such a center block, right-and-left stability is improved by the lateral-long block main portion, and a large edge component is obtained. Therefore, the drive force on a off-road can be improved.

The center block can also improve the straight running stability owi ng to di ggi ng into the soft ground and cutti ng into the road surface in the partial running and braking on mud; thereby preventing the wobble effectively. The keel portion is especially prepared on a rear side in the ti re rolling direction and can contact strongly the ground in breaking. Therefore, the above-mentioned keel effect is improved much more. Furthermore, the keel portion prepared integrally on the block main portion can certainly improve the keel effect without falling over sideways when contacting the ground, and which supports the block portion from a rear side; thereby inhibiting the block main portion to deform toward the rear si de in ground-contacti ng, and thereby exerting traction.

### BRIEF DESCRIPTION OF THE DRAWINGS

[Fig. 1] Fig. 1 is a development view of an off-road pneumatic tire produced according to the present embodiment.
[Fig. 2] Fig. 2 is a cross sectional view taken along line A-A in Fig. 1.
[Fig. 3] Fig. 3 is a partial perspective view of the pneumatic tire.
[Fig. 4] Fig. 4 is a top view of a center block.
[Fig. 5] Fig. 5 is a perspective view of the center block from a front side of the tire rolling direction.
[Fig. 6] Fig. 6 is a perspective view of the center block from a rear side of the tire rolling direction.

### EXPLANATION OF THE REFERENCE

- 1: Off-road pneumatic tire
- 2: Tread portion
- 9: Block
- 10A: center block row
- 10B: Middle block row
- 10C: Shoulder block row
- 11: center block
- 12: Middle block
- 13: shoulder block
- 11a: Block main body
- 11b: Keel portion
- C: Equator

### BEST MODE FOR CARRYING OUT THE INVENTION

Hereinafter, an embodiment of the present invention will now be described on the basis of drawings.

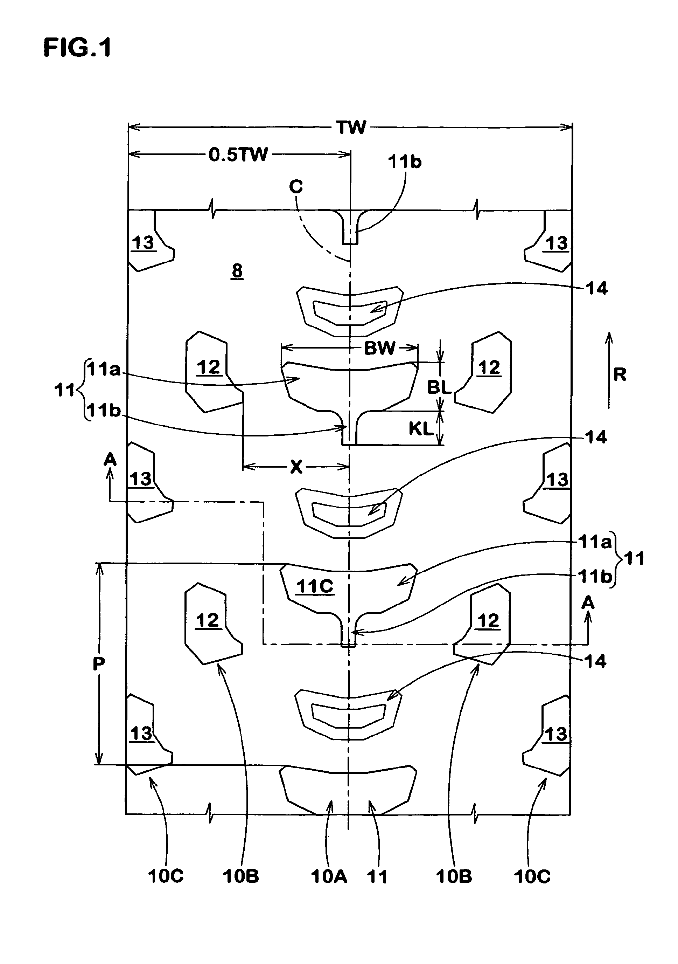

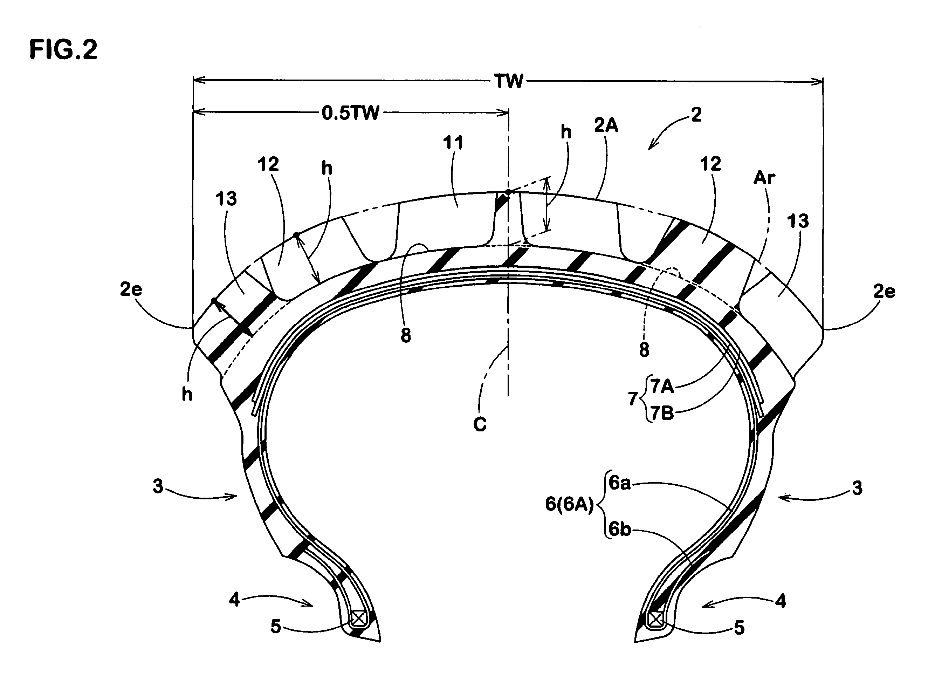

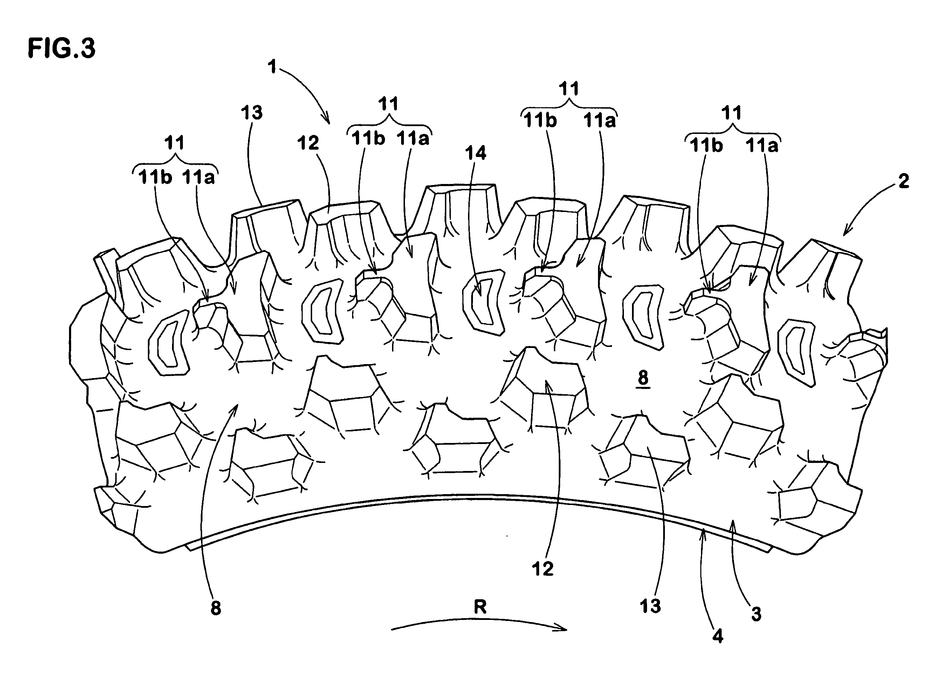

Fig. 1 shows a development view of the tread portion 2 of an off-road pneumatic tire (hereinafter sometimes referred to as "pneumatic tire") produced according to the present embodiment, Fig. 2 is a cross sectional view thereof taken along line A-A, and Fig. 3 is a partial perspective vi ew of the pneumatic tire. The off-road pneumatic tire 1 is a tire designed to exe rt the performance supremely on an off-road such as a road for motocross . Also, in the pneumatic tire 1 according to the present embodiment, the rolling direction R thereof is predetermined to exert the supreme performance of the tread pattern.

The pneumatic ti re 1 of the present embodiment is, as shown in Fig. 2, comprises a tread portion 2, a pair of sidewall portions 3 extending from the both sides thereof inwardly in the radial direction, and bead portions extending inward the respective sidewall portions 3.

The pneumatic tire 1 is for motorcycle, for example. The tread width TW is an axial distance between tread ends 2e, 2e, which is a maximum width of tire, and the tread portion 2 curves convexly outwardly in the radial direction in a circular arc having a relatively small radius of curvature.

In principle, the above-mentioned tread wi dth TW i s an axi al distance between the ground contacting edges when a tire contacts the ground with the tread 2 at a camber angle of zero deg. under a standard state, that is, the tire mounted on a standard rim inflated to a standard pressure and loaded with no load. However, the tire for a motorcycle according to the present embodiment, the tread portion 2 is circular arc in form, and the distance between the tread outmost edges 2e, 2e in the tread axi al direction is clear; therefore, the above axi al di stance between the tread edges 2e, 2e under the standard state (unloaded) is set to a tread width TW.

Here, the "standard rim" is a design rim officially approved for a tire by standard organizations, namely, "Standard rim" in JATMA, "Design Rim" in TRA, "Measuring Rim" in ETRTO and the like.

The "standard pressure" is a pressure officially approved for a tire by standard organizations, namely, "maximum air pressure" in JATMA, the maximum pressure given in the "Tire Load Limits at various Cold Inflation Pressures" table i n TRA, the "Inflation Pressure" in ETRTO, and the like. In case of passenger car tires, however, 180 kPa is used as the standard pressure.

The "standard load" is a load officially approved for the tire by standard organizations, for example, the "maximum load capability" in JATMA, the maximum value given in the "Tire Load Limits at various Cold Inflation Pressures" table in TRA, the "Load capacity" in ETRTO and the like. In case of passenger car tires, however, 88% of the above-mentioned load is used as the standard load.

Meanwhile, when there is no standard, the above-mentioned definition shall be followed recommendation value proposed by a manufacturer. Unless otherwise noted, dimensions of respective portions of the tire shall be values under the above-mentioned standard state.

The pneumatic tire 1 is reinforced by a carcass 6 made of at least one of carcass ply 6A extending between bead cores 5, 5 in respective bead portions 4, and a tread reinforcing cord layer 7 disposed outwardly in the tire radial direction. The carcass ply 6A is made of preferably carcass cords made oforgani c fi ber. In the present embodi ment, the carcass ply 6A comprises a troidal main portion 6a extends between a pair of bead cores 5,5, and turnup portions 6b turned up around each of the above-mentioned bead core 5 from the axially inside to the axially outside of the tire. And, the carcass 6 preferably possesses a bias structure made of two or more carcass plies 6A, but may possess a radial structure. The above-mentioned tread reinforcing cord layer 7 comprises for example organic fiber cords, which comprises two reinforcing plies, radially inner reinforcing ply 7A and radially outer reinforcing ply 7b in the present embodiment.

As shown in Fig. 1 or 3, the tread portion 2 is provided with a plural of blocks extruded outwardly in the tire radial direction from the tread bottom surface 8 (in particular, center blocks 11, middle blocks 12, and shoulder blocks 13) comparatively sparsely.
This arrangement helps to increase the ground-contacting pressure, to improve the quantity of digging into the mud ground, and ensure high drive force. And around each of the blocks, the tread bottom surface 8 is formed over a large area, thereby improving mud drainage performance and preventing clogging.

The above-mentioned sparse distributional arrangement of blocks is expressed quantitatively by the land ratio (Sb/S) of subtotal Sb of the ground contacting areas of all blocks to the total surface are a S of tread surface (a virtual tread surface area obtained by filling in the above-mentioned tread bottom surface 8). However, when the land ratio is extremely small, the drive force may decrease on a hard road or a medium road; and when it is too large, the drive force on the above-mentioned soft road may decrease. From this point of view, the land ratio (Sb/S) is preferably not less than 5%, more preferably not less than 17%, further more preferably not less then 18%. The upper limit thereof is preferably not more than 30%, more preferably not more than 28%, further more preferably not more than 26%.

And, each of the above-mentioned blocks has a height (h) in the tire normal direction from the tread bottom surface 8. when the height (h) is too small, the drive force and braking force in the mud may not be sufficiently obtained; and when it is too large, bendi ng moment acts in a base of the block in running or braking, thereby deteriorating durability of the blocks. Therefore, the above-mentioned height (h) is preferably not less than 10.0 mm, more preferably not less than 11.0 mm; and, the upper limit is not more than 19.0 mm, more preferably not more than 18.0 mm.

The tread portion 2 comprises plural rows (five rows) of:
a center block row 10A composed of center blocks 11 arranged in the tire circumferential direction on the tire equator C,
a pair of middle block rows 10B composed of middle blocks 12 disposed outside each of the center block row in the ti re axial direction and arranged in the tire circumferential direction, and
a pair of shoulder block rows 10C composed of shoulder blocks 13 disposed outside each of the middle block rows in the ti re axial direction and arranged in the tire circumferential direction.

In this way, since the tread portion 2 of the present embodiment is provided with a total of five block rows separately, the middle blocks 12 and the shoulder blocks 13 contact a road surface in a good balance at the time of not only straight runni ng but al so corneri ng wi th a vehicle body inkling. Therefore, a sufficient drive force can be secured also at the time of cornering.

The above-mentioned center blocks 11, which arranged on a central region of the tread portion 2 and on the ti re equator C, can surely contact the road surface in straight running. Meanwhile, "arranged on the tire equator C" means that a part of a tread surface 11C of each of the center blocks 11 is simply on the tire equator C. However, it is preferable that a center line in width direction of the center blocks 11 is coincident with the ti re equator C and that each of the center blocks is bilaterally symmetric in view of the straight running stability.

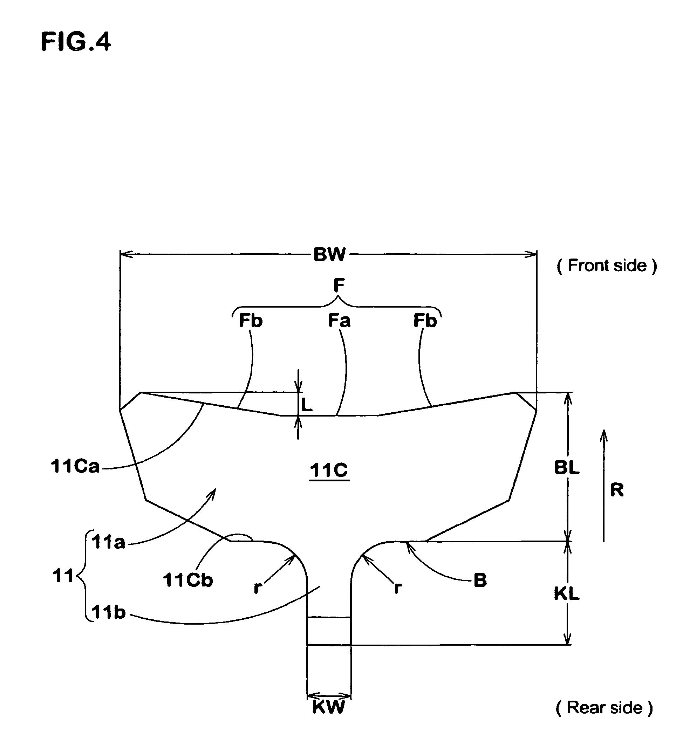

As shown in Figs. 1 and 4, the center block 11 comprises
a lateral-long block main portion 11a having a width Bw in the tire axial direction larger than a length BL in the tire circumferential direction, and
a keel portion 11b prepared integrally on the rear side of the block main portion 11a in the tire rotational direction R and projecting with a small width toward the rear side in the tire rotational direction.

In such a center block 11, the lateral-long blockmain portion 11a improves the right-and -left stability at the time of ground-contacting. And, the block main portion 11a has a large edge component in the tire axial direction; therefore, a high drive force on an off-road can be exerted.

Moreover, the center block 11 can improve the straight running stability owing to the keel portion 11b digging into the soft ground and cutting the road surface in twin in the partial running and braking on mud, too; thereby preventing the wobble effectively. Especially, the keel portion 11b is arranged in the rear si de in the tire rotational di recti on R, and the keel portion 11b contacts strongly the road surface at the time of breaking, thereby improving further more the above-mentioned keel effect. Furthermore, the keel portion 11b, which is prepared integrally on the block main portion 11a, can keep reasonably the rigidity in the ti re axial direction and can exert surly the above-mentioned keel effect without falling largely over sideways when contacting the ground. Moreover, the keel portion 11b supports the block main portion 11a from the rear side, thereby inhibiting the block main portion 11a to deform toward the rear side at the time of ground-contacting, and thereby exerting traction. Meanwhile, if the keel portion 11b is arranged in the front side of the block main portion 11a in the tire rotational direction R, quantity of mud colliding with the front side of the block main portion 11a decreases, and the traction deteriorates.

when the above-mentioned width Bw of the center block 11 is too small, the edge component in the ti re axi al di recti on becomes too small; and the traction could deteriorate. However, when the width BW is too larger, the rigidity in the ti re circumferential direction and mud drainage could deteriorate. From this standpoint, the above-mentioned width Bw of the center block 11 is preferably not less than 10% of the tread width Tw, more preferably not less than 20%; and, the upper limit thereof is preferably not more than 50%, more preferably not more than 40%. Similarly, the ratio (BW/BL) between the above-mentioned width BW and the length BL in the tire circumferential direction is preferably not less than 1.5, more preferably not less than 2.0; and, the upper limit thereof is preferably 6 not more than 5.0, more preferably not more than 3.0.

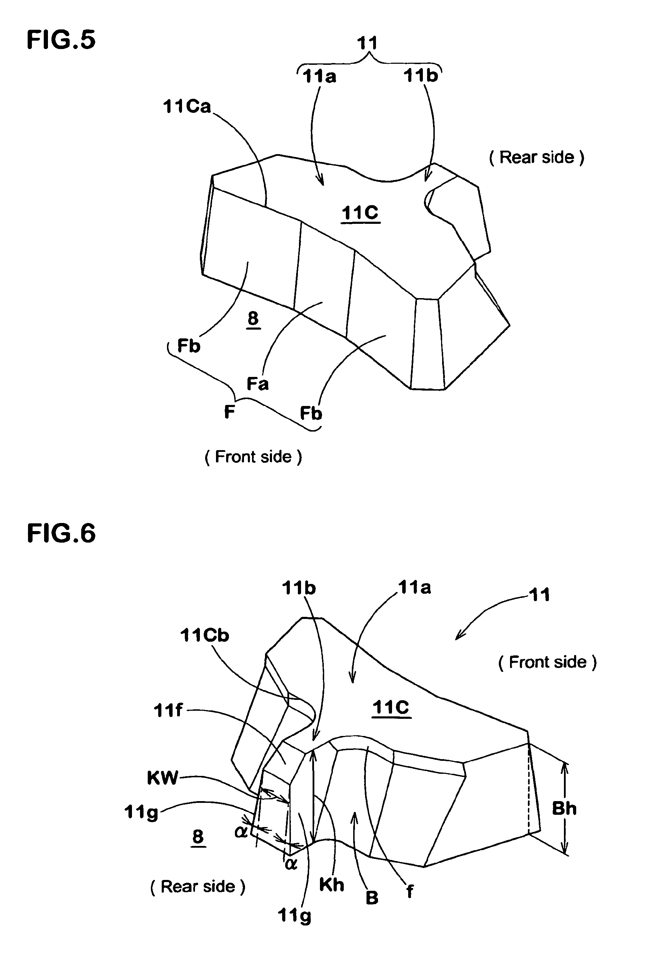

AS shown in Figs. 4 and 5, the block main portion 11a has a front wall F extending between a front edge 11Ca of the tread surface 11C in the tire rotational direction and the tread bottom surface 8. The front wall F is in a concave shape such that the front wall extends inwardly in the tire axial direction from the both axially outer edges of the front wall while concavi ng toward the rear side in the tire rotational direction. Such a front wall F in a concave shape can collect the mud effectively without letting out the mud, so that the traction can be improved further more.

The front wall F accordi ng to the present i nventi on comprises three flat surfaces of:
a central part Fa located in a central region in the ti re axi al di recti on and extending substantially along the tire axial direction, and
a pair of end parts Fb extending from the both ends of the central part outwardly in the ti re axial di recti on and toward the front side in the tire rotational direction;
but they may be made of smooth circular arcs. To improve more the above-mentioned effect, as shown in Fig. 4, a concave quantity L in the tire circumferential di rection of the concave surface portion F measured at the front edge 11Ca of the tread surface 11C is preferably not less than 2% of the length BL of the block main portion 11a, more preferably not less than 10%; and, the upper limit thereof is preferably not more than 30%, more preferably not more than 20%.

The above-mentioned keel portion 11b is made with a small width to cut the mud by ground-contacting so as to improve the straight runni ng stability. It is preferable to provi de wi th a si ngl e keel portion 11b in each of the center blocks 11 and to arrange the keel portion bilaterally symmetrically on the tire equator C. Meanwhile, it is also possible to provide with two keel portions 11b in a single center block 11.

when a width WK of the keel portion 11b is too small, the keel portion deforms in the tire axial direction at the time of ground-contacting and it cannot exert sufficient keel effect. However, when the width KW of the keel portion 11b is too large, it becomes difficult for the keel portion 11b to dig into a road surface. From the view point of this, the width Kw of the keel portion 11b is preferably not less than 2 mm, more preferably not less than 3 mm; and, the upper limit thereof is preferably not more than 6 mm, more preferably not more than 5 mm. Meanwhile, while the width KW may be constant or can vary in the tire circumferential direction and/or in the tire radial direction, the above-mentioned values are outmost dimensions in the ti re radi al direction.

Similarly, when a length KL of the keel portion 11b in the tire circumferential direction is too small, an enough effect to improve the straight running stability could not be obtained. However, when the width is too large, the keel portion is liable to fall toward the tire axial direction, and the straight running stability could not be improved sufficiently. Therefore, the length KL of the keel portion 11b is preferably not less than 5% of a pitch P of the center block 11 in the tire circumferential direction (shown in Fig. 1), more preferably not less than 10%; and, the upper limit thereof is preferably not more than 30%, more preferably not more than 20%. The pitch P of the center block 11 is preferably not less than 2.5% of the outer circumferential length of the tire (at the tire equator position), more preferably not less than 2.7%; and, the upper limit thereof is preferably not more than 3.5%, more preferably not more than 4.0%.

As shown in Fig. 6, a height Kh of the keel portion 11b in the tire radial direction is preferably between 50 to 100% of a height Bh of the block main portion 11a. when the height Kh of the keel portion 11b is less than 50% of the height Bh of the block main portion 11a, the quantity of the keel portion 11b cutting into a road surface could deteriorate, and the straight running stability could not be improved. However, the height Kh of the keel portion 11b is more than 100% of the height Bh of the block main portion 11a, wear and cuts are liable to occur in the keel portion 11b i n the early stages, and an exterior appearance of the tire could enormously deteriorate.

As shown in Fig. 6, a reentrant part between the keel portion 11b and the rear wall B extending from the rear edge 11Cb of the block main portion 11a in the tire rotational direction and the tread bottom surface 8 is preferably chamfered by a circular arc face (f). This will preferably prevent stress concentration at the above-mentioned internal corner and prevent an occurrence of clacks effectively and will suppress a deformation of the keel portion 11b in the ti re axial direction at the time of ground-contacting.

Also, to suppress a large deformation of the keel portion 11b in the tire axial direction at the time of ground-contacting, as shown in Fig. 6, it is preferable that the width Kw of the keel portion 11b preferably increases gradually toward the tread bottom surface 8. It is specifically preferable that both of edge surfaces 11g of the keel portion 11b incline outwardly in the ti re axial direction toward the tread bottom surface 8 at an angle α in a range of between more than zero deg. and not more than 10 deg. wi th respect to the ti re equator face. Meanwhile, when the angle α exceeds 10 deg., it is not desirable because resistance at the time of the keel portion 11b cutti ng into the road surface increases,

As shown in Fig. 6, it is preferable to provide in the keel porti on 11b with an inclined porti on 11f chamfered between the tread surface and the rear side of the rear wall in the tire rotational direction R. The inclined portion 11f suppresses a wear of the keel portion 11b, and then the keel effect will exert over a long period of time. Meanwhile, the inclined portion 11f shown in Fig. 6 has a single plane, but it will be obvious to be a smooth circular arc.

AS shown in Fig. 1, for the above-mentioned middle block 12 and the above-mentioned shoulder block 13, vertical-long blocks are used, each of which has a length in the tire circumferential direction longer than the width in the tire axial direction. This will improve the pattern rigidity of the tread portion 2 in a good balance.

A distance x in the tire axial direction between an inner edge in the tread surface of the above-mentioned middle block 12 and the tire equator C is preferably 30 to 80% of half the tread width TW, 0.5TW. This will help to provide an enough room for earth removal between the middle block 12 and the center block 11, and to improve the running performance in mud.

However, in the present embodiment, there is a concave portion 14 between the center blocks 11 lie next to each other in the tire circumferential direction, wherein the tread bottom surface 8 is locally concaved. The concave portion 14 decreases a rubber thickness of the tread portion 2 and decreases relatively the rigidity thereof. Therefore, when running through projections on a road surface, the tread portion 2 can deform flexibly and locally with originating on the concave portion 14. This will allow the tread portion 2 to locally deform inwardly in the tire radial direction such that the tread portion 2 covers the projections, thereby preventing impact at the time of running over the projections and transmission of the impact force to a driver.

while the above description has been made of a preferable embodiment of the present invention, the illustrated embodiments should not be construed as to limit the scope of the present invention; various modifications are possible without departing from the scope of the present invention.

### EMBODIMENT

A plural kinds of off-road pneumatic tires for rear wheels of a motorcycle were produced so as to have the tread pattern shown in Fig. 1 and the specification in Table 1. The size of the tires was 120/80-90 (tread width TW = 75.8 mm). The tires were tested for performances. As Conventional Example, a center block is made of only a block main portion, which does not comprise any keel portion. And, as Comparative Example, a keel portion of a center block is disposed in the front side in the tire rotational direction. Compositions expect the keel portion; Examples, Conventional Example, and Comparative Example were the same. The test methods are as follows.

### <Running performance>

Each of test tires was mounted on a rear rim (19x2.15) of a motorcycle and inflated to an inner pressure (0.08 kPa). A professional test-driver drove the motorcycle at full throttle on a muddy motocross course. Running performance was evaluated by the test-driver's comprehensive feeling into five ranks based on Conventional Example being 3.0, wherein a larger value indicates the superior running performance.

### <Straight running stability>

under the above-mentioned condition, the test motorcycle was driven unacceleratedly at a speed of 40 km/hour. Straight running stability was evaluated by the test-driver's feeling into five ranks based on Conventional Example being 3.0, wherein a larger value indicates superior the straight running stability.

### <Traction>

Under the above-mentioned condition of the motorcycle, a professional test-driver drove the motorcycle on the same test course. Transmissibility of drive force to a road surface was evaluated by the test-driver's feeling into five ranks based on Conventional Example being 3.0, wherein a larger value indicates superior traction. The test results are shown in Table 1.

**[Table 1]**

| | Conventional Ex. | Comparative Ex. | Ex. 1 | Ex. 2 | Ex. 3 | Ex. 4 | Ex. 5 | Ex. 6 | Ex. 7 | Ex. 8 | Ex. 9 |
|---|---|---|---|---|---|---|---|---|---|---|---|
| Width BW of Block main part [mm] | 46 | 46 | 46 | 46 | 46 | 46 | 46 | 46 | 46 | 46 | 46 |
| Length BL of Block main part [mm] | 18 | 18 | 18 | 18 | 18 | 18 | 18 | 18 | 18 | 18 | 18 |
| Ratio (BW/BL) [%] | 260 | 260 | 260 | 260 | 260 | 260 | 260 | 260 | 260 | 260 | 260 |
| Concave quantity L of Front wall [mm] | 3.0 | 3.0 | 3.0 | 3.0 | 3.0 | 3.0 | 3.0 | 3.0 | 3.0 | 3.0 | 3.0 |
| Keel portion presence | No | Yes | Yes | Yes | Yes | Yes | Yes | Yes | Yes | Yes | Yes |
| Position of Keel portion | - | Front side | Rear side | Rear side | Rear side | Rear side | Rear side | Rear side | Rear side | Rear side | Rear side |
| Width KW of Keel portion [mm] | - | 4.0 | 4.0 | 4.0 | 4.0 | 4.0 | 4.0 | 4.0 | 2.0 | 6.0 | 8.0 |
| Length KL of Keel portion [mm] | - | 16 | 16 | 16 | 16 | 16 | 16 | 16 | 16 | 16 | 16 |
| Angle (α) of side surface of Keel portion [deg.] | - | 3 | 3 | 3 | 3 | 5 | 10 | 20 | 3 | 3 | 3 |
| Distance X/0.5TW [%] | 47.5 | 47.5 | 47.5 | 47.5 | 47.5 | 47.5 | 47.5 | 47.5 | 47.5 | 47.5 | 47.5 |
| Ratio(Kh/Bh) [%] | - | 100 | 100 | 80 | 50 | 100 | 100 | 100 | 100 | 100 | 100 |
| Running performance [5 ranks] | 3 | 3 | 3 | 3 | 3 | 3 | 2.9 | 2.5 | 3 | 3 | 2.8 |
| Straight running stability [5 ranks] | 3 | 3.2 | 3.5 | 3.3 | 3.1 | 3.4 | 3.4 | 3.4 | 3.3 | 3.3 | 3.3 |
| Traction [5 ranks] | 3 | 2.8 | 3 | 3 | 3 | 3 | 2.9 | 2.5 | 3 | 3 | 3 |

| | | | | | | | | | | | |
|---|---|---|---|---|---|---|---|---|---|---|---|
| Tread width TW =75.8 mm, and positional pitch P of Center blocks = 71.8 mm | | | | | | | | | | | |

The test results confirmed that the tires according to Examples were effectively improved in the steering stability, and where comparable to conventional Example in durability and traction.

## Claims

1. An off-road pneumatic tire (1), which has on a tread portion (2) at least one block row comprising a plural of blocks (9) arranged in the tire circumferential direction, wherein
said block row includes at least one center block row (10A) composed of center blocks (11) arranged on the tire equator (C),
each of said center blocks (11) comprises
a lateral-long block main portion (11a) having a width (BW) in the tire axial direction larger than the length of the block main portion (11a) in the tire circumferential direction, and
a keel portion (11b) prepared integrally on the rear side of the block main portion (11a) in the tire rotational direction (R),
**characterized in that**
the keel porti on (11b) projects with a small width (Kw) toward the rear side in the tire rotational direction (R),
each of said block main portions (11a) has a front wall (F) extending between a front edge (11Ca) in the tire rotational di rection of the tread surface (2) and a tread bottom (8), and
the front wall (F) is in a concave shape such that the front wall (F) extends axially inward the tire axial direction from the both axially outer edges of the front wall (F) while concaving toward the rear side in the tire rotational direction.

2. The off-road pneumatic tire as set forth in claim 1, wherein said keel portion (11b) has a length (KL) in the tire circumferential direction being 5 to 30% of a pitch (P) of said center block (11) in the ti re circumferential direction.

3. The off-road pneumatic tire as set forth in claim 1 or 2, wherein said width (BW) of said center block (11) in the ti re axi al di recti on i s 10 to 50% of the tread wi dth (TW).

4. The off-road pneumatic tire as set forth in any one of claims 1 to 3, wherein
said block row includes a middle block row (10B) composed of middle blocks (12) di sposed outside the center blocks (11) in the tire axial direction and arranged in the tire circumferential direction; and
the di stance (X) in the ti re axially di recti on between the axial inner edge of said middle block (12) and the tire equator (C) is 30 to 80% of half the tread width (TW).

## Patentansprüche

1. Geländeluftreifen (1), der an einem Laufflächenabschnitt (2) zumindest eine Blockreihe aufweist, die eine Mehrzahl von Blöcken (9) umfasst, die in der Umfangsrichtung des Reifens angeordnet sind, wobei
die Blockreihe zumindest eine zentrale Blockreihe (10A) umfasst, die aus zentralen Blöcken (11) zusammengesetzt ist, die auf dem Reifenäquator (C) angeordnet sind,
wobei jeder der zentralen Blöcke (11) umfasst
einen lateral langen Blockhauptabschnitt (11a), der eine Breite (BW) in der axialen Richtung des Reifens aufweist, die größer als die Länge des Blockhauptabschnitts (11a) in der Umfangsrichtung des Reifens ist, und
einen Kielabschnitt (11b), der einstückig an der Rückseite des Blockhauptabschnitts (11a) in der Drehrichtung des Reifens (R) vorgesehen ist,
**dadurch gekennzeichnet, dass**
der Kielabschnitt (11 b) mit einer kleinen Breite (KW) zu der Rückseite in der Drehrichtung des Reifens (R) hin vorsteht,
jeder der Blockhauptabschnitte (11a) eine vordere Wand (F) aufweist, die sich zwischen einem vorderen Rand (11Ca) in der Drehrichtung des Reifens der Laufflächen-Oberfläche (2) und einem Laufflächengrund (8) erstreckt, und
die vordere Wand (F) in einer konkaven Form vorliegt, so dass die vordere Wand (F) sich in der axialen Richtung des Reifens von beiden axial äußeren Rändern der vorderen Wand (F) axial einwärts erstreckt, während sie zu der Rückseite in der Drehrichtung des Reifens hin konkav verläuft.

2. Geländeluftreifen nach Anspruch 1,
wobei der Kielabschnitt (11 b) eine Länge (KL) in der Umfangsrichtung des Reifens aufweist, die 5 bis 30 % eines Teilungsabstandes (P) des zentralen Blocks (11) in der Umfangsrichtung des Reifens beträgt.

3. Geländeluftreifen nach Anspruch 1 oder 2,
wobei die Breite (BW) des zentralen Blocks (11) in der axialen Richtung des Reifens 10 bis 50 % der Laufflächenbreite (TW) beträgt.

4. Geländeluftreifen nach einem der Ansprüche 1 bis 3, wobei
die Blockreihe eine mittlere Blockreihe (10B) umfasst, die aus mittleren Blöcken (12) zusammengesetzt ist, die außerhalb der zentralen Blöcke (11) in der axialen Richtung des Reifens angeordnet und in der Umfangsrichtung des Reifens eingerichtet sind; und
der Abstand (X) in der axialen Richtung des Reifens zwischen dem axial inneren Rand des mittleren Blocks (12) und dem Reifenäquator (C) 30 bis 80 % der Hälfte der Laufflächenbreite (TW) beträgt.

## Revendications

1. Bandage pneumatique tout-terrain (1) qui comporte, sur une portion formant bande de roulement (2), au moins une rangée de blocs comprenant une pluralité de blocs (9) agencés dans la direction circonférentielle du pneumatique, dans lequel
ladite rangée de blocs inclut au moins une rangée de blocs centrale (10A) composée de blocs centraux (11) agencés sur l'équateur du pneumatique (C),
chacun desdits blocs centraux (11) comprend
une portion principale de bloc (11a) à longueur latérale ayant une largeur (BW) dans la direction axiale du pneumatique plus grande que la longueur de la portion principale de bloc (11a) dans la direction circonférentielle du pneumatique, et
une portion en forme de quille (11b) préparée intégralement sur le côté arrière de la portion principale de bloc (11a) dans la direction de rotation (R) du pneumatique,
**caractérisé en ce que**
la portion en forme de quille (11b) se projette avec une petite largeur (KW) vers le côté arrière dans la direction de rotation du pneumatique (R),
chacune desdites portions principales de bloc (11a) a une paroi frontale (F) s'étendant entre une bordure frontale (11Ca) dans la direction de rotation du pneumatique de la surface de roulement (2) et un fond (8) de la bande de roulement, et
la paroi frontale (F) a une forme concave de telle façon que la paroi frontale (F) s'étend axialement vers l'intérieur dans la direction axiale du pneumatique depuis les deux bordures axialement extérieures de la paroi frontale (F) tout en étant concave vers le côté arrière dans la direction de rotation du pneumatique.

2. Bandage pneumatique tout-terrain selon la revendication 1,
dans lequel ladite portion en forme de quille (11b) a une longueur (KL), dans la direction circonférentielle du pneumatique, qui est de 5 à 30 % d'un pas (P) dudit bloc central (11) dans la direction circonférentielle du pneumatique.

3. Bandage pneumatique tout-terrain selon la revendication 1 ou 2, dans lequel ladite largeur (BW) dudit bloc central (11) dans la direction axiale du pneumatique est de 10 à 50 % de la largeur (TW) de la bande de roulement.

4. Bandage pneumatique tout-terrain selon l'une quelconque des revendications 1 à 3, dans lequel
ladite rangée de blocs inclut une rangée de blocs médians (10B) composé de blocs médians (12) disposés à l'extérieur des blocs centraux (11) dans la direction axiale du pneumatique et agencés dans la direction circonférentielle du pneumatique ; et
la distance (X), dans la direction axiale du pneumatique, entre la bordure axialement intérieure dudit bloc médian (12) et l'équateur (C) du pneumatique est de 30 à 80 % de la moitié de la largeur (TW) de la bande de roulement.
